Europäisches Patentamt

European Patent Office

Office européen des brevets

(19)

(11) EP 0 753 788 A1

## (12) DEMANDE DE BREVET EUROPEEN

(43) Date de publication:
**15.01.1997 Bulletin 1997/03**

(51) Int Cl.⁶: **G02F 1/39**, G02F 1/35

(21) Numéro de dépôt: **96401401.3**

(22) Date de dépôt: **25.06.1996**

(84) Etats contractants désignés:
**DE GB**

(30) Priorité: **30.06.1995 FR 9507918**

(71) Demandeur: **THOMSON-CSF**
**75008 Paris (FR)**

(72) Inventeurs:
- **Rosencher, Emmanuel**
  **92402 Courbevoie Cedex (FR)**
- **Berger, Vincent**
  **92402 Courbevoie Cedex (FR)**

(54) **Convertissuer de fréquence comprenant un guide semi-conducteur à hétérostructure**

(57) L'invention concerne un convertisseur de fréquence permettant notamment de générer des ondes optiques dans l'infrarouge moyen (3.12 µm) à partir de sources optiques dans le proche infrarouge.

Il comprend un guide semiconducteur à hétérostructure constitué d'une alternance de couches de matériau $M_I$ et $M_{II}$, l'un au moins de ces matériaux étant un semiconducteur non linéaire, et le plan des couches étant parallèle à la direction de propagation des ondes électromagnétiques dans le guide.

FIG.1

EP 0 753 788 A1

## Description

Le domaine de l'invention est celui des sources optiques utilisant des convertisseurs de fréquence, permettant notamment de générer des ondes optiques dans l'infrarouge moyen (3-12 μm) à partir de sources optiques dans le proche infrarouge.

Actuellement les émetteurs d'ondes infrarouges moyens appartiennent typiquement aux trois familles suivantes :

- les diodes lasers à base de matériaux semiconducteurs à petits gaps comme PbSnSe ou HgCdTe. Ces diodes lasers fonctionnent à basse température, l'accord en longueur d'onde se faisant surtout par variation de la température de fonctionnement. Ces dispositifs sont peu puissants, nécessitent des cryostats et sont d'un emploi peu pratique ;

- les oscillateurs paramétriques optiques (OPO) qui génèrent l'émission optique par interaction non-linéaire dans les matériaux massifs (utilisant des opérations de conversion de fréquence). Cette technique présente deux inconvénients. Le premier est qu'elle présuppose l'existence de cristaux biréfringents. La deuxième difficulté est que les rendements de conversion étant modestes en milieu massif (comme le niobate de lithium $LiNbO_3$), cela nécessite des lasers de pompe puissants et encombrants.

Dans ce contexte, la présente invention concerne un autre type de convertisseur de fréquence dont les caractéristiques originales permettent d'envisager de meilleures performances que celles obtenues avec les dispositifs actuels.

Le convertisseur de fréquence selon l'invention utilise la technique dite de "down-conversion" dans un guide semiconducteur. Cette technique est bien décrite dans le livre "Quantum Electronics de Ammon YARIV (John Wiley and Sons, New York, 1989) ; elle consiste à mélanger deux ondes dans le proche infrarouge, de fréquences $\omega_1$ et $\omega_2$, dans un milieu non linéaire pour générer une onde dans le moyen infrarouge à la fréquence $\omega_3$, selon la relation suivante : $\omega_3 = \omega_1 - \omega_2$ (1)

Ainsi pour générer une émission de longueur d'onde comprise entre 8 et 12 μm, il suffit de mélanger une onde de pompe à 0,9 μm et une onde de pompe accordable de longueur d'onde comprise entre 0,95 et 1 μm. De telles ondes de pompe sont actuellement disponibles avec les lasers à semiconducteurs.

L'avantage d'utiliser des sources à infrarouge proche ests substantiel, car il existe de nombreuses sources accordables dans le proche infrarouge qui sont très puissantes et compactes (diodes à semiconducteur par exemple).

Pour réaliser cette technique de conversion, le convertisseur de fréquence utilise une structure de guide semiconducteur, ce qui représente le point fort de l'invention.

En effet, des semiconducteurs tels que GaAs ou ZnSe présentent des coefficients non linéaires du deuxième ordre (nécessaire pour cette "down conversion") extrêmement importants : de l'ordre de 100 pm/V soit 5 fois plus que des cristaux d'oxydes métalliques tels que le KTP. De plus, la technologie de ces semiconducteurs est très développée, ce qui conduit à des techniques de fabrication bien moins onéreuses que pour les cristaux d'oxydes métalliques.

Il est ainsi possible de réaliser des structures guidantes en semiconducteur et fabriquer des convertisseurs de fréquence fonctionnant en optique guidée.

De façon plus précise, l'invention a pour objet un convertisseur de fréquence d'onde électromagnétique capable de générer une onde électromagnétique de fréquence $\omega_3$, à partir d'une onde électromagnétique de fréquence $\omega_1$ caractérisé en ce qu'il comprend un guide semiconducteur à hétérostructure constitué d'une alternance de couches de matériau $M_I$ et $M_{II}$, l'un au moins de ces matériaux étant un semiconducteur non-linéaire, le plan des couches étant parallèle à la direction de propagation des ondes électromagnétiques dans le guide.

L'invention a aussi pour objet un convertisseur de fréquence alimenté par une seule onde de pompe de fréquence $\omega_1$ et qui comprend deux miroirs situés aux extrémités du guide, lesdits miroirs étant capables de réfléchir fortement l'onde de fréquence $\omega_1$ et transmettre des ondes de fréquences $\omega_2$ et $\omega_3$ générées dans le convertisseur.

De préférence, la condition d'accord de phase entre les ondes électromagnétiques de fréquence $\omega_1$, $\omega_2$ et $\omega_3$ est réalisée pour des modes de propagation (TE) et (TM) différents entre les ondes de pompe et/ou les ondes générées. On utilise pour cela la biréfringence de forme des hétérostructures semiconductrices constituant le guide, comme cela sera développé ultérieurement.

Le convertisseur de fréquence selon l'invention peut avantageusement comprendre une structure à double coeur, dans laquelle le guide central, inséré dans un milieu semiconducteur $SC_3$, guide les ondes dans les infrarouges proches, le milieu $SC_3$ étant lui-même inséré dans un milieu semiconducteur $SC_4$ pour guider les ondes dans l'infrarouge moyen.

Pour augmenter les performances du convertisseur de fréquence selon l'invention, il peut être très avantageux d'utiliser des structures quantiques, élaborées grâce à des épaisseurs de couches de matériaux $M_I$ et $M_{II}$ très faibles.

L'invention sera mieux comprise et d'autres avantages apparaîtront à la lecture de la description qui va suivre donnée à titre non limitatif et grâce aux figures annexées, parmi lesquelles :

- la figure 1 schématise un convertisseur de fréquence selon l'invention ;
- la figure 2 illustre la biréfringence de forme calculée dans un milieu lamellaire constitué de couches GaAs et AlAs d'égales épaisseurs ;

- la figure 3 illustre la dispersion de l'indice de réfraction en fonction de la longueur d'onde ;

  * la figure 3a représente une dispersion classique

  * la figure 3b illustre la biréfringence de forme dans une structure lamellaire telle que celle utilisée dans l'invention

- la figure 4 illustre l'évolution de la longueur de cohérence $L_c$ en fonction de la longueur d'onde générée, dans un milieu lamellaire GaAs/AlAs pour différentes longueurs d'onde de pompe ;
- la figure 5 illustre l'évolution de la longueur d'onde générée en fonction d'une des longueurs d'onde de pompe pour laquelle il y a accord de phase;
- la figure 6 illustre une configuration de convertisseur de fréquence utilisant une structure à double coeur;
- la figure 7 illustre les transitions possibles dans une structure à puits quantiques pour des modes TE (-) et TM (···) ;

  * la figure 7a est relative à une structure sans champ électrique appliqué

  * la figure 7b est relative à une structure sous champ électrique

  * la figure 7c illustre les indices TE et TM de la structure en fonction de l'énergie $2\pi h\omega$

- la figure 8 schématise une structure de convertisseur de fréquence, à guide d'onde, pilotable par tension électrique ;

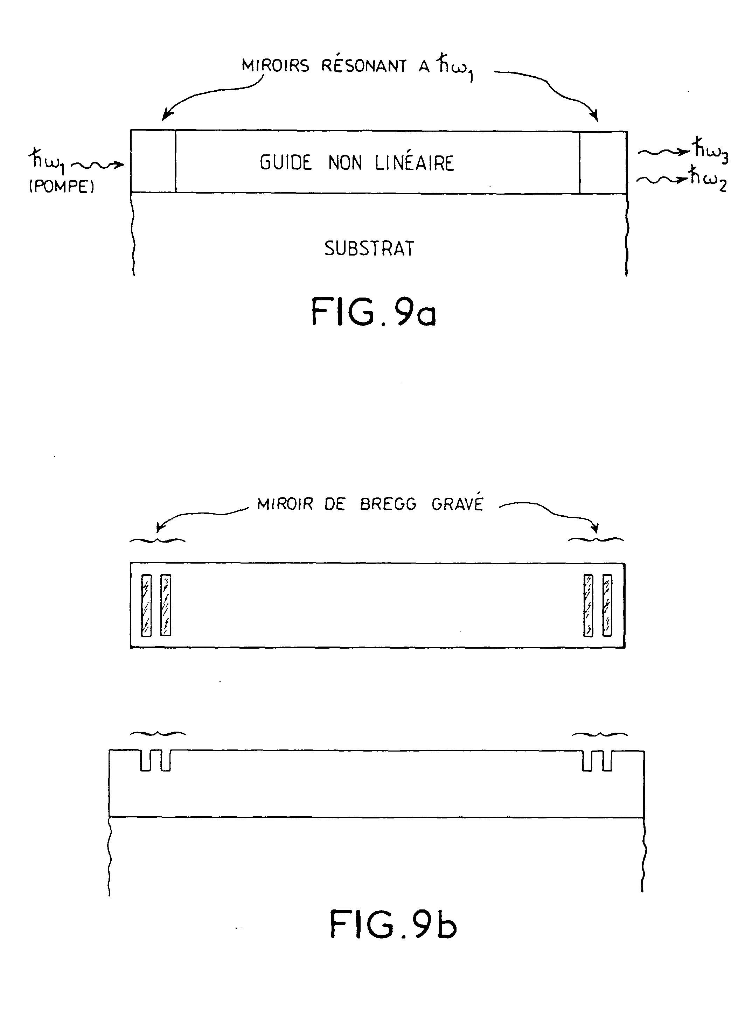

- la figure 9 illustre un convertisseur de fréquence selon l'invention fonctionnant en oscillateur paramétrique optique ;
- la figure 10 illustre les différentes étapes de procédé conduisant à la réalisation d'une alternance de couches GaAs/AlOx.

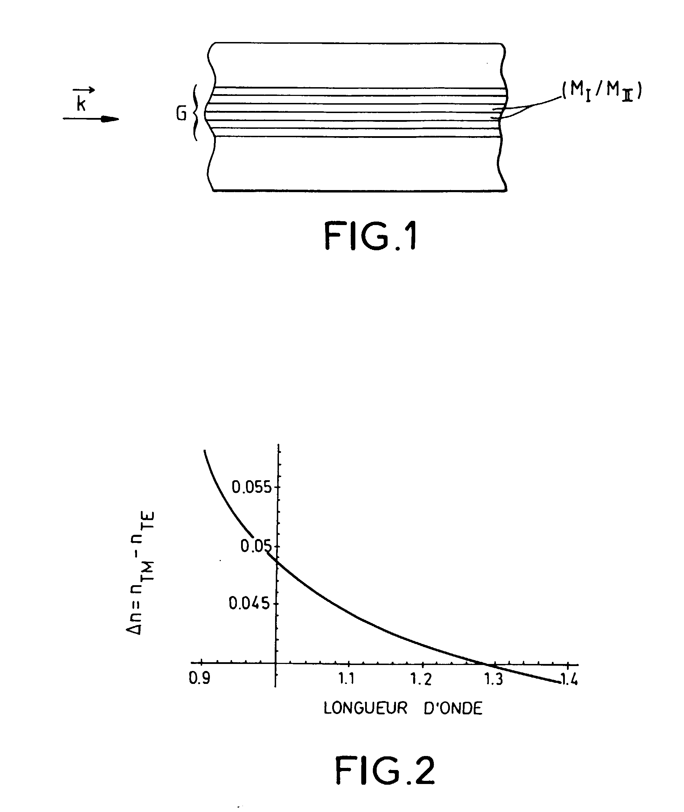

Le convertisseur de fréquence comprend un guide (G) constitué d'un empilement de couches de matériau $M_I$ et de matériau $M_{II}$ comme illustré en figure 1. Ce plan des couches est parallèle à la direction de propagation $\vec{k}$ des ondes de pompe ou des ondes créées.

Les matériaux constitutifs de l'empilement des couches peuvent avantageusement être deux matériaux semiconducteurs $SC_1/SC_2$ tels que GaAs/AlAs, Si/SiGe ou bien encore ZnTe/ZnSe.

Il peut également s'agir d'une alternance d'un semiconducteur et d'un isolant $SC_1/I$.

Le guide est inséré dans un milieu semiconducteur d'indice plus faible.

L'architecture proposée est particulièrement intéressante dans la mesure où elle permet de satisfaire efficacement la condition d'accord de phase entre les ondes de pompe et les ondes générées.

En effet, de manière générale dans les opérations de conversion de fréquence, l'onde générée par la différence de fréquences de deux ondes de pompes à $\omega_1$ et $\omega_2$ interfère destructivement avec ces ondes de pompe sur une distance nommée "longueur de cohérence" $L_c$ donnée par la formule suivante :

$$1/L_c = n(\lambda_1)/\lambda_1 - n(\lambda_2)/\lambda_2 - n(\lambda_3)/\lambda_3 \qquad (2)$$

Dans cette formule, $n(\lambda_i)$ est l'indice optique du matériau correspond à la longueur d'onde $\lambda_i$. La puissance générée s'annule périodiquement dans le matériau sur des noeuds de vibrations séparés par cette longueur de cohérence. Le but de l'accord de phase est de rendre $L_c$ infini. Néanmoins, à cause de la dispersion naturelle des matériaux, l'indice $n(\lambda)$ est une fonction strictement décroissante de la longueur d'onde $\lambda$ ce qui rend l'équation (2) impossible à satisfaire. Jusqu'à présent, une technique classique utilisée pour pallier ce problème est d'utiliser une direction ordinaire et extraordinaire des faisceaux pompes et générés, satisfaisant ainsi une équation de type :

$$n_e(\lambda_1)/\lambda_1 - n_o(\lambda_2)/\lambda_2 - n_e(\lambda_3)/\lambda_3 = 0 \qquad (3)$$

où $n_e$ et $n_o$ sont les indices optiques ordinaires et extraordinaires. Néanmoins, une telle technique ne peut être utilisée pour les semiconducteurs usuels, comme GaAs ou ZnSe, qui ne sont pas biréfringents.

De préférence, la condition d'accord de phase est satisfaite dans le convertisseur de fréquence selon l'invention en utilisant la biréfringence de forme.

Il est en effet connu, que des ondes optiques se déplaçant dans un milieu stratifié ont des vitesses de phase différentes suivant que leur polarisation est perpendiculaire (mode TM) ou parallèle (mode TE) au plan des couches : cet effet se nomme "biréfringence de forme". Ainsi, comme l'a montré Van Der Ziel dans Applied Physics Letters, 15 Janvier 1975 (p. 60), pour un milieu infini constitué d'un empilement de couches de deux matériaux d'indices différents $n_1$ et $n_2$ et de même épaisseurs, les indices des ondes TE et TM sont respectivement

$$\varepsilon_{TE} = (\varepsilon_1 + \varepsilon_2)/2 \text{ et } 1/\varepsilon_{TM} = 1/\varepsilon_1 + 1/\varepsilon_2 \qquad (4)$$

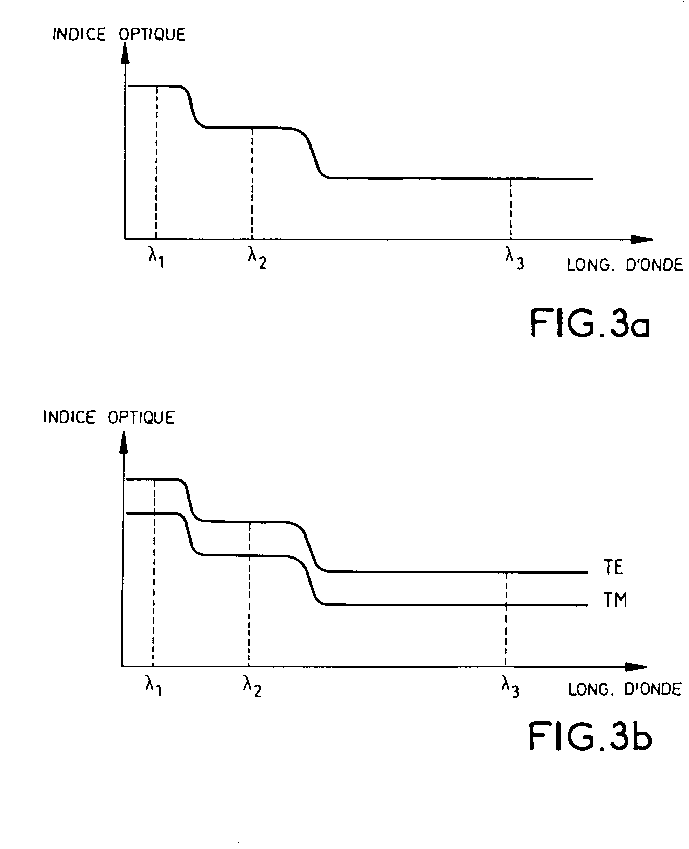

A titre d'exemple, la figure 2 montre la biréfringence $\Delta n = n_{TE} - n_{TM}$ dans une hétérostructure GaAs/AlAs. Pour une structure guidante plus complexe, les indices optiques effectifs TE et TM sont bien plus difficiles à calculer, néanmoins la conclusion reste la même : les indices optiques TE et TM sont différents, comme l'illustre la figure 3b, la figure 3a étant représentative de la dispersion naturelle de l'indice d'un matériau en fonction de la longueur d'onde.

Afin de satisfaire la condition d'accord de phase (2), il est nécessaire de diminuer l'indice de la pompe à $\lambda_1$ par rapport à celle à $\lambda_2$. On aura ainsi :

$$n_{TM}(\lambda_1)/\lambda_1 - n_{TE}(\lambda_2)/\lambda_2 - n_{TE}(\lambda_3)/\lambda_3 = 0 \quad (5)$$

Pour exemple, une telle équation (4) peut être satisfaite en utilisant un milieu de couches GaAs/AlAs d'égales épaisseurs typiquement 100 Å, pour des longueurs d'onde de pompe accordables entre 1,02 et 1,42 μm et des longueurs d'onde générées comprises entre 8 et 12 μm.

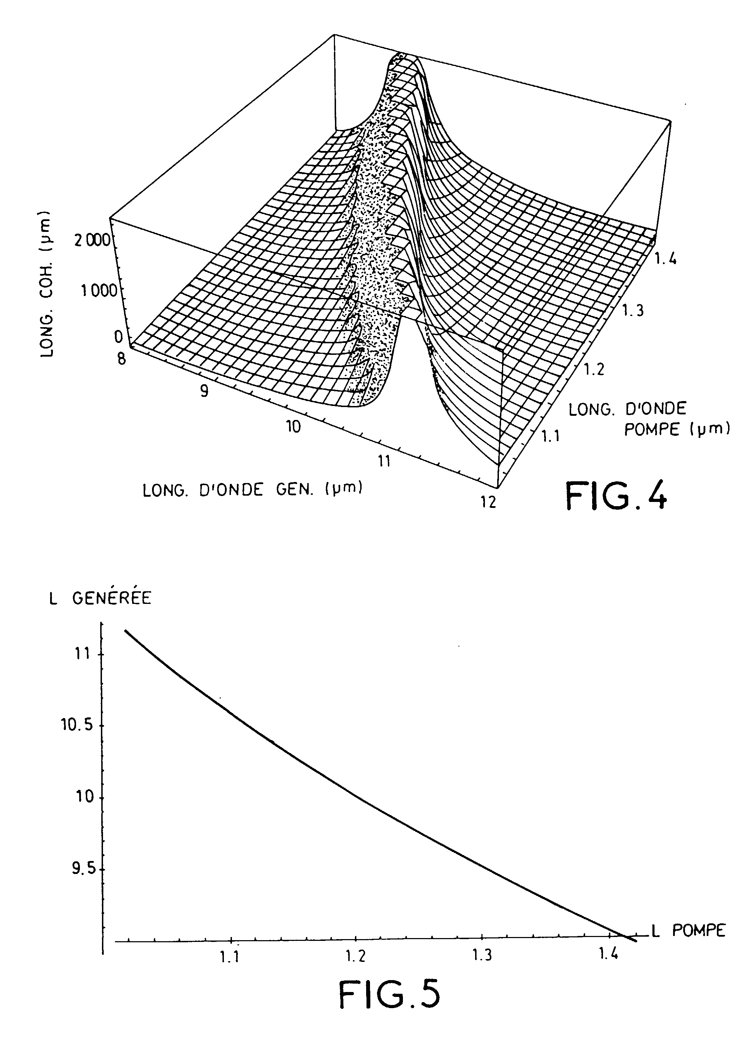

A ce titre, la figure 4 illustre que la longueur de cohérence diverge pour certains couples $\lambda_1$ et $\lambda_3$, ce que montre que l'accord de phase est possible. De plus, les conditions de résonance ne sont pas trop étroites : des longueurs de cohérence de plus d'1 cm peuvent être obtenues sur une plage de 0,2 μm. La figure 5 montre une courbe de conversion obtenue, c'est-à-dire les longueurs d'onde générées en fonction des longueurs d'onde de pompe $\lambda_3$ ($\lambda_1$), ce qui valide le fait que la gamme de longueurs d'onde 8-12 μm peut effectivement être couverte par cette technique.

Notons que pour la génération de différence de fréquence soit rendue possible, il est nécessaire que les coefficients non-linéaires correspondant aux directions sollicitées soient non nuls. Ainsi pour GaAs, comme seuls les termes $\chi_{xyz}$ sont non nuls, des précautions doivent être prises sur les polarisations des champs de pompe.

Une configuration possible consiste à orienter la polarisation TE d'un champ de pompe à 45° des axes principaux du cristal semiconducteur utilisé, l'autre champ de pompe étant en mode TM.

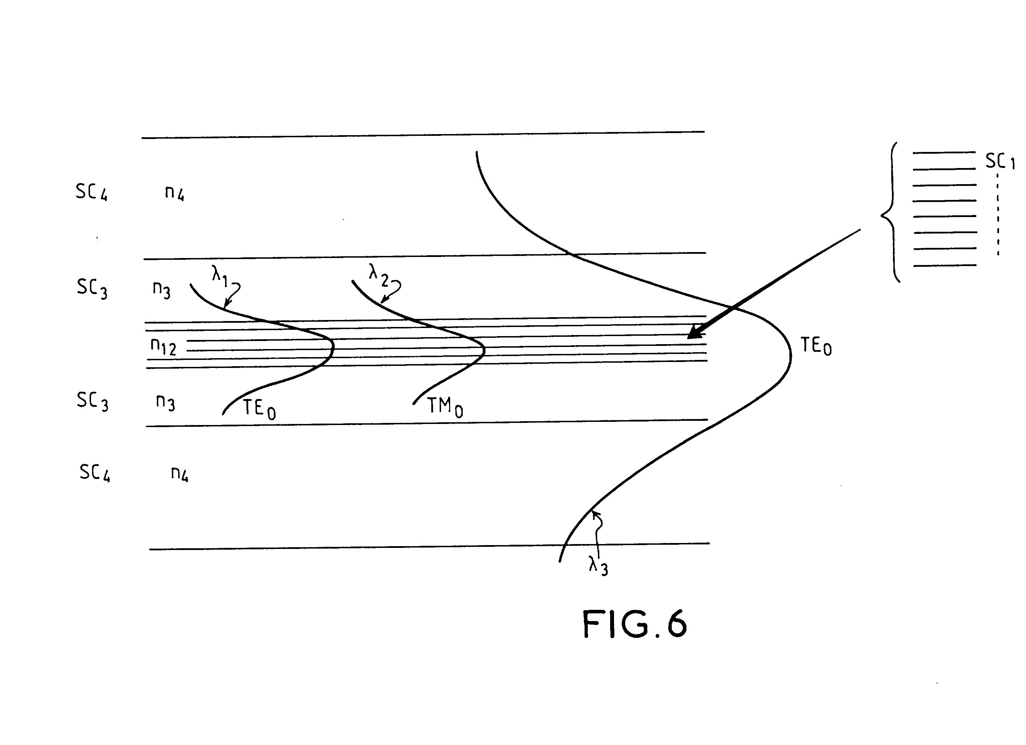

Pour optimiser les performances du convertisseur de fréquence selon l'invention, au niveau de la puissance générée par le guide non-linéaire, il est important de confiner au maximum cette dernière. C'est pourquoi dans un mode de réalisation préférentiel, le convertisseur de fréquence comprend une structure à double coeur comme illustrée en figure 6. Un premier guide est réalisé à partir de l'empilement des couches de matériau $M_I$ et $M_{II}$, l'indice de ce guide étant représenté $n_{12}$, ce guide étant inséré dans un matériau semiconducteur $SC_3$ d'indice $n_3$, lui-même inséré dans un autre matériau semiconducteur $SC_4$ d'indice $n_4$. Les épaisseurs des deux guides sont calculées de manière que seuls les modes de faible indice TEo ($\lambda_1$) et TMo ($\lambda_2$) soient présents à toutes les longueurs d'onde et que les intégrales de recouvrement des modes soient élevées dans le guide semiconducteur. La figure 6 montre un exemple de modes obtenus dans une structure où les matériaux $SC_1$ et $SC_2$ sont respectivement GaAs et AlAs, les matériaux $SC_3$ et $SC_4$ étant AlGaAs et AlAs.

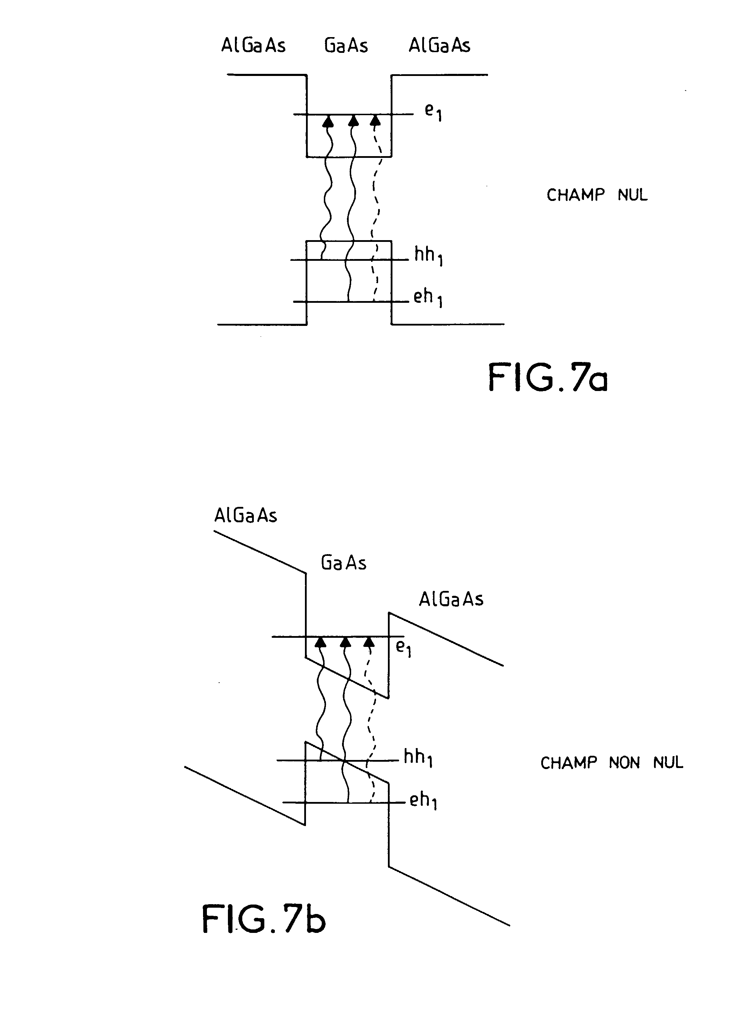

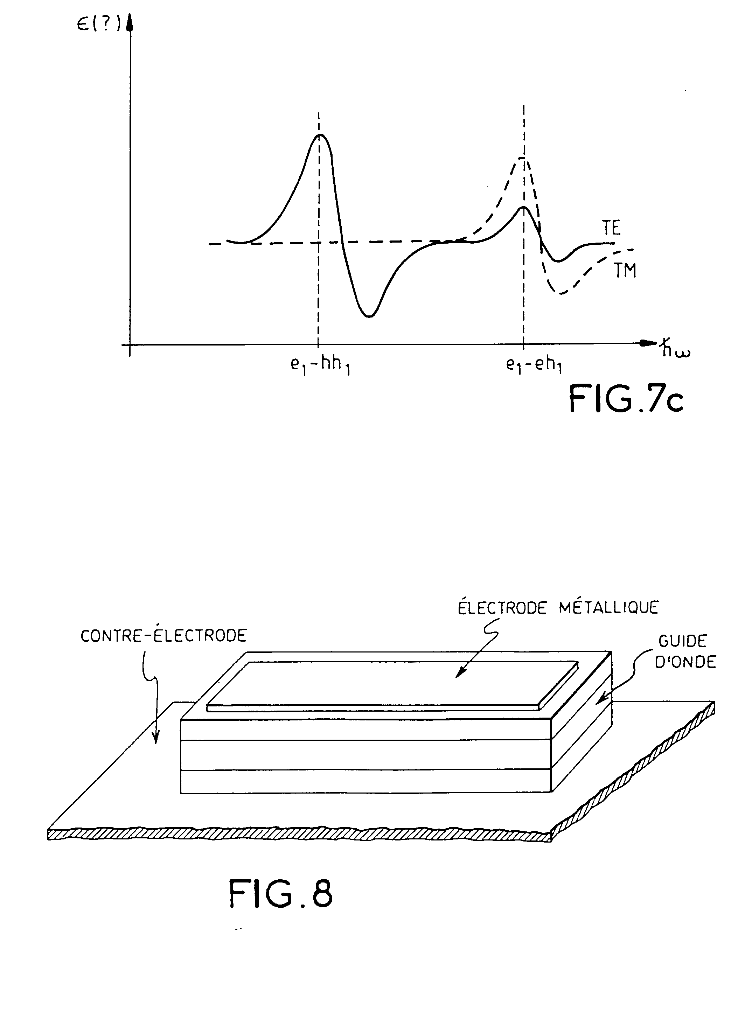

Dans un autre exemple de convertisseur de fréquence selon l'invention, le guide à hétérostructure est constitué de couches de très faibles épaisseurs conduisant à la formation de puits quantiques et à la discrétisation des niveaux d'énergie. Il est en effet connu que dans les structures à puits quantiques à semiconducteur, les fonctions d'onde de trous légers et de trous lourds présentent des symétries différentes entre elles. Les transitions optiques pour des ondes TM et TE sont alors très différentes ainsi que les indices optiques associés, comme il est expliqué par exemple dans le livre de Gérald Bastard, Wave mechanics applied to semiconductor heterostructures, les Editions de Physique. Il est alors possible d'augmenter la biréfringence du milieu non-linéaire en utilisant des structures quantiques, comme cela est illustré en figure 7. Une épaisseur typique de couches pour réaliser des structures à puits quantiques est de l'ordre de quelques dizaines d'Angstroems (50 Å). La figure 8 montre en traits pleins (en traits pointillés) les transitions possibles entre les niveaux $hh_1$ et $e_1$ et entre les niveaux $lh_1$ et $e_1$, pour les modes TE (pour les modes TM).

Il apparaît ainsi que pour une structure à puits quantiques réalisée à partir du couple de matériaux AlGaAs: GaAs, les transitions en mode (TE) sont plus favorisées entre $e_1$ et $hh_1$ qu'entre $e_1$ et $lh_1$, alors qu'en mode (TM) seule la transition entre $e_1$ et $lh_1$ est possible.

Cette configuration augmente donc fortement la biréfringence.

Un autre intérêt des structures quantiques, réside dans l'importance des effets électrooptiques mis en jeu. Il s'agit d'"'Effet Stark Confine" notamment décrit dans l'ouvrage de Gérald Bastard. En appliquant une tension électrique perpendiculairement au plan des puits quantiques comme illustré en figure 8, il est possible de faire varier de façon forte importante les indices optiques des différentes transitions optiques, donc les longueurs d'onde des ondes générées. Le convertisseur de fréquence selon l'invention comporte dans ce cas de figure une contre-électrode et une électrode supérieure permettant d'appliquer le champ électrique désiré. Ceci permet donc d'accorder électriquement l'onde infrarouge générée. Enfin on pourra aussi utiliser des couches SC contraintes comme InP/InGaAs dont on sait qu'elles augmentent aussi la biréfringence.

Dans les différentes variantes de l'invention jusqu'alors présentées, le convertisseur de fréquence était alimenté par deux pompes à deux longueurs d'ondes différentes.

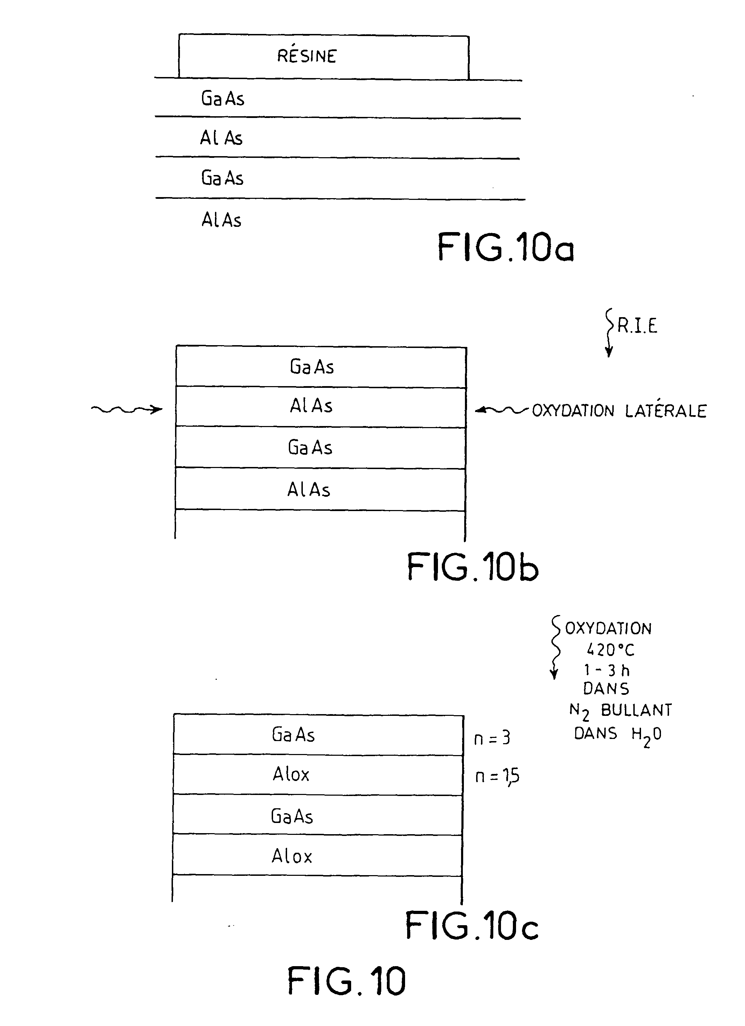

Néanmoins, le convertisseur de fréquence selon l'invention peut également fonctionner en oscillateur paramétrique optique. Dans ce cas une seule longueur d'onde de pompe est utilisée. Pour cela deux miroirs sont choisis pour réfléchir très fortement la longueur d'onde de pompe et transmettre les longueurs d'ondes générées. La figure 10 illustre un exemple de configuration possible pour les miroirs réalisés de part et d'autre du convertisseur de fréquence utilisé en oscillateur paramétrique optique. Ces miroirs sont des miroirs de Bragg qui peuvent notamment être gravés jusqu'à la surface du guide semiconducteur à hétérostructure.

Dans cette configuration, le convertisseur de fréquence est capable de générer de fortes puissances, ce qui le rend particulièrement intéressant en régime impulsionnel.

De manière générale, les performances du convertisseur de fréquence selon l'invention sont liées à la différence d'indice entre les matériaux $M_I$ et $M_{II}$. Il s'avère que plus cette différence est élevée, meilleures en sont les performances. Typiquement, les indices des matériaux GaAs et AlAs cités précédemment sont respectivement de 3,3 et 2,9.

Il est apparu qu'en oxydant AlAs l'indice de réfraction était abaissé à une valeur de 1,5 permettant d'augmenter par la même l'efficacité du convertisseur de fréquence selon l'invention.

La figure 10 illustre les différentes étapes de procédé permettant d'oxyder des couches de AlAs.

Pour cela, des motifs en résine sont déposés à la surface d'une alternance de couches de GaAs/AlAs de manière classique pour définir la surface de convertisseur. Les différentes couches sont gravées par gravure ionique réactive (RIE).

L'ensemble est placé dans un four parcouru par un gaz porteur ($N_2$ par exemple) saturé par de la vapeur d'eau (oxydation pendant plusieurs heures à 420°C). AlAs est ainsi oxydé en $AlO_x$ d'indice plus faible.

## Revendications

1. Convertisseur de fréquence d'onde électromagnétique capable de générer une onde électromagnétique de fréquence $\omega_3$, à partir d'une onde électromagnétique de fréquence $\omega_1$, caractérisé en ce qu'il comprend un guide semiconducteur à hétérostructure constitué d'une alternance de couches de matériau $M_I$ et $M_{II}$, l'un au moins de ces matériaux étant un semiconducteur non-linéaire, le plan des couches étant parallèle à la direction de propagation des ondes électromagnétiques dans le guide.

2. Convertisseur de fréquence d'onde électromagnétique selon la revendication 1, caractérisé en ce qu'il est alimenté par deux pompes d'ondes électromagnétiques de fréquence $\omega_1$ et $\omega_2$ dont la différence est égale à la fréquence générée $\omega_3$.

3. Convertisseur de fréquence d'onde électromagnétique selon la revendication 1, caractérisé en ce qu'il est alimenté par une seule onde de pompe de fréquence $\omega_1$ et qu'il comprend deux miroirs situés aux extrémités du guide, capables de réfléchir fortement l'une au moins des trois ondes de fréquence $\omega_1$, $\omega_2$, $\omega_3$.

4. Convertisseur de fréquence selon l'une des revendications 2 ou 3, caractérisé en ce que la condition d'accord de phase entre les ondes électromagnétiques aux fréquences $\omega_1$, $\omega_2$, $\omega_3$ est réalisée pour des modes de propagation (TE) et (TM), différents entre les ondes de pompe et/ou les ondes générées.

5. Convertisseur de fréquence selon l'une des revendications 1 à 4, caractérisé en ce qu'il comprend une structure à double coeur, dans laquelle le guide à hétérostructure est inséré dans un autre guide constitué par un milieu semiconducteur ($SC_3$), lui-même inséré dans un milieu semiconducteur ($SC_4$).

6. Convertisseur de fréquence selon l'une des revendications 1 à 5, caractérisé en ce que le couple de matériaux $M_I/M_{II}$ est de type GaAs/AlAs, Si/SiGe, ZnTe/ZnSe, ...

7. Convertisseur de fréquence selon l'une des revendications 1 à 6, caractérisé en ce que la longueur d'onde de l'onde de pompe est voisine du micron, la longueur d'onde de l'onde générée est de l'ordre de 10 µm, l'épaisseur des couches étant typiquement de quelques centaines d'Angströms.

8. Convertisseur de fréquence selon l'une des revendications 1 à 6, caractérisé en ce que le guide possède une structure quantique constituée d'un empilement de couches d'épaisseur voisine de quelques dizaines d'Angströms.

9. Convertisseur de fréquence selon l'une des revendications 1 à 5, caractérisé en ce que le matériau $M_I$ est du GaAs, le matériau $M_{II}$ étant un matériau isolant de type AlOx, produit d'oxydation de AlAs.

10. Convertisseur de fréquence selon l'une des revendications 1 à 9, caractérisé en ce qu'il comprend des moyens électriques permettant d'appliquer un champ électrique perpendiculairement au plan des couches constituant le guide de manière à faire varier les longueurs d'onde générées.

FIG.1

LONGUEUR D'ONDE

FIG.2

INDICE OPTIQUE

$\lambda_1$   $\lambda_2$   $\lambda_3$   LONG. D'ONDE

# FIG.3a

INDICE OPTIQUE

$\lambda_1$   $\lambda_2$   $\lambda_3$   LONG. D'ONDE

TE

TM

# FIG.3b

FIG.4

FIG.5

FIG.6

9

AlGaAs    GaAs    AlGaAs

$e_1$

CHAMP NUL

$hh_1$

$eh_1$

FIG.7a

AlGaAs

GaAs

AlGaAs

$e_1$

$hh_1$    CHAMP NON NUL

$eh_1$

FIG.7b

FIG.7c

FIG.8

EP 0 753 788 A1

MIROIRS RÉSONANT A $\hbar\omega_1$

$\hbar\omega_1$
(POMPE)

GUIDE NON LINÉAIRE

$\hbar\omega_3$
$\hbar\omega_2$

SUBSTRAT

FIG.9a

MIROIR DE BREGG GRAVÉ

FIG.9b

RÉSINE

GaAs

Al As

GaAs

AlAs

# FIG.10a

$\}$ R.I.E

GaAs

Al As    ←∼ OXYDATION LATÉRALE

GaAs

AlAs

# FIG.10b

$\}$ OXYDATION
   420°C
   1 - 3 h
   DANS
  $N_2$ BULLANT
  DANS $H_2O$

GaAs     $n = 3$

Alox     $n = 1,5$

GaAs

Alox

# FIG.10c

# FIG.10

**Office européen des brevets**

## RAPPORT DE RECHERCHE EUROPEENNE

Numero de la demande

EP 96 40 1401

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 324 505 (CANON KK) 19 Juillet 1989 <br> * colonne 3, ligne 15 - ligne 39 * <br> * colonne 3, ligne 56 - colonne 4, ligne 3 * <br> * colonne 4, ligne 19 - ligne 28 * <br> --- | 1,6,8,10 | G02F1/39 <br> G02F1/35 |
| X | GB-A-2 187 569 (PHILIPS ELECTRONIC ASSOCIATED) 9 Septembre 1987 <br> * page 2, ligne 9 - ligne 19 * <br> * page 4, ligne 2 - ligne 6 * <br> --- | 1-3,6-8, 10 | |
| X | GB-A-1 254 617 (NORTH AMERICAN ROCWELL CORP) 24 Novembre 1971 <br> * page 1, ligne 62 - ligne 85 * <br> * page 3, ligne 61 - ligne 72 * <br> * page 6, ligne 111 - ligne 123 * <br> * page 7, ligne 29 - ligne 47 * <br> --- | 1-4,6,10 | |
| D,X | APPLIED PHYSICS LETTERS, 15 JAN. 1975, USA, <br> vol. 26, no. 2, ISSN 0003-6951, <br> pages 60-61, XP002016044 <br> VAN DER ZIEL J P: "Phase-matched harmonic generation in a laminar structure with wave propagation in the plane of the layers" <br> * le document en entier * <br> --- | 1,4 | DOMAINES TECHNIQUES RECHERCHES (Int.Cl.6) <br><br> G02F |
| X | US-A-3 982 135 (VAN DER ZIEL JAN PETER) 21 Septembre 1976 <br> * le document en entier * <br> --- | 1,4 | |
| | -/-- | | |

Le présent rapport a été établi pour toutes les revendications

| Lieu de la recherche | Date d'achèvement de la recherche | Examinateur |
|---|---|---|
| LA HAYE | 16 Octobre 1996 | Galanti, M |

EPO FORM 1503 03.82 (P04C02)

Office européen
des brevets

**RAPPORT DE RECHERCHE EUROPEENNE**

Numero de la demande

EP 96 40 1401

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | APPLIED PHYSICS LETTERS, vol. 66, no. 3, 16 Janvier 1995, pages 265-267, XP000486023 CHUI H C ET AL: "TUNABLE MID-INFRARED GENERATION BY DIFFERENCE FREQUENCY MIXING OF DIODE LASER WAVELENGTHS IN INTERSUBBAND INGAAS/ALAS QUANTUM WELLS" * le document en entier * --- | 1,2,7,8 | |
| A | LEOS '94. CONFERENCE PROCEEDINGS. IEEE LASERS AND ELECTRO-OPTICS SOCIETY 1994 7TH ANNUAL MEETING (CAT. NO.94CH3371-2), PROCEEDINGS OF LEOS'94, BOSTON, MA, USA, 31 OCT.-3 NOV. 1994, ISBN 0-7803-1470-0, 1994, NEW YORK, NY, USA, IEEE, USA, pages 328-329 vol.2, XP002016045 JANZ S ET AL: "Sum and difference frequency mixing in semiconductor heterostructures" * le document en entier * --- | 1 | |
| P,X | APPLIED PHYSICS LETTERS, 4 MARCH 1996, AIP, USA, vol. 68, no. 10, ISSN 0003-6951, pages 1320-1322, XP000582289 FIORE A ET AL: "Huge birefringence in selectively oxidized GaAs/AlAs optical waveguides" * le document en entier * ----- | 1-10 | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 16 Octobre 1996 | Galanti, M |

EPO FORM 1503 03.82 (P04C02)